# EUROPÄISCHE PATENTSCHRIFT

(11) **EP 3 341 285 B1**
(45) Veröffentlichungstag und Bekanntmachung des Hinweises auf die Patenterteilung: **12.06.2019**
(21) Anmeldenummer: 16766513.2
(22) Anmeldetag: 08.09.2016
(51) Int. Cl.: H02K 9/24, B63G 8/08, B63H 21/17, F01P 5/14, H02K 9/19

(54) **ANTRIEB FÜR EIN WASSERGEBUNDENES FORTBEWEGUNGSMITTELS**
DRIVE FOR A WATER-BORNE MEANS OF TRANSPORT
PROPULSION POUR UN MOYEN DE LOCOMOTION MARIN

(30) Priorität: 30.09.2015 DE 102015218896
(43) Veröffentlichungstag der Anmeldung: 04.07.2018
(73) Patentinhaber: Siemens Aktiengesellschaft, 80333 München (DE)
(72) Erfinder: SCHLAPPA, Robert, 91315 Höchstadt a.d. Aisch (DE); ECKERT, Jürgen, 91085 Weisendorf (DE); MARX, Walter, 90427 Nürnberg (DE)
(86) Internationale Anmeldenummer: PCT/EP2016/071171
(87) Internationale Veröffentlichungsnummer: WO 2017/055050

(56) Entgegenhaltungen:
- WO-A1-2004/030182
- DE-U1-202009 015 027
- KR-A- 20150 010 377

## Beschreibung

Die Erfindung betrifft einen Antrieb für ein wassergebundenes Fortbewegungsmittel. Ein Schiff oder ein U-Boot sind Beispiele für wassergebundene Fortbewegungsmittel.

Unterseeboote oder Schiffe werden häufig mit Elektroantrieben betrieben, welche die Schraube, also den Propeller des Unterseeboots oder des Schiffs antreiben.

Zur Kühlung des Antriebs ist beispielsweise eine Kühlmittelpumpe vorgesehen. Mit Hilfe der Kühlmittelpumpe lassen sich z.B. Kühlkanäle eines Stators der elektrischen Maschine oder eine Kühleinrichtung wie einen Wärmetauscher für Kühlluft mit Kühlflüssigkeit beschicken. Dokument WO 2004/030182 A1 wird als nächstliegender Stand der Technik betrachtet und offenbart den Oberbegriff des Anspruchs 1.

Eine Aufgabe der Erfindung ist es, einen Antrieb eines Unterseeboots oder eines Schiffs anzugeben, welcher eine sichere Kühlung aufweist. Durch eine sichere Kühlung wird die Einsatzfähigkeit z.B. des Unterseeboots oder des Schiffes verbessert.

Eine Lösung der Aufgabe ergibt sich bei einem Antrieb nach Anspruch 1, einem wassergebundenen Fortbewegungsmittels nach Anspruch 12, und bei einem Verfahren nach Anspruch 13, 14 oder 16. Ausgestaltungen der Erfindung ergeben sich nach den abhängigen Ansprüchen 2 bis 11 und 15.

Ein Antrieb eines wassergebundenen Fortbewegungsmittels, wie z.B. ein Unterseeboot oder ein Schiff weist einen Elektromotor auf. Der Elektromotor kann beispielsweise auch generatorisch betrieben werden und wird beispielsweise als Antriebsmotor für die Welle des wassergebundenen Fortbewegungsmittels verwendet, mit der ein Propeller angetrieben werden kann. Zur Kühlung des Elektromotors ist beispielsweise Kühlluft oder eine Kühlflüssigkeit vorgesehen. Die Kühlung mit Kühlflüssigkeit kann beispielsweise direkt oder indirekt erfolgen. Bei einer direkten Kühlung mit Kühlflüssigkeit wird diese beispielsweise durch Kühlkanäle im Stator des Elektromotors geführt. Bei einer indirekten Kühlung mit Kühlflüssigkeit wird beispielsweise Kühlluft durch Kühlkanäle im Stator geführt und die Kühlluft in einem Wärmetauscher, welcher mit Kühlflüssigkeit beschickt wird, durch die Kühlflüssigkeit gekühlt. Der Antrieb weist eine erste Kühlmittelpumpe, eine zweite Kühlmittelpumpe, eine erste Kühlmittelpumpenversorgung und eine zweite Kühlmittelpumpenversorgung auf. Die erste Kühlmittelpumpe und die zweite Kühlmittelpumpe sind beispielsweise so ausgebildet, dass diese eine Pumpeinrichtung für die Kühlflüssigkeit aufweisen und eine elektrische Maschine zum Antreiben der jeweiligen Pumpeinrichtung.

Ein Antrieb eines wassergebundenen Fortbewegungsmittels, wie ein Unterseeboot oder ein Schiff, ist derart ausbildbar, dass der Antrieb einen Elektromotor, eine erste Kühlmittelpumpe, eine zweite Kühlmittelpumpe, eine erste Kühlmittelpumpenversorgung und eine zweite Kühlmittelpumpenversorgung aufweist, wobei die erste Kühlmittelpumpenversorgung mit einer ersten Teilsteuerung und mit einer zweiten Teilsteuerung datentechnisch verbunden ist, und wobei die zweite Kühlmittelpumpenversorgung mit der ersten Teilsteuerung und mit der zweiten Teilsteuerung datentechnisch verbunden ist. Damit kann ein Fehler in einer Datenkommunikation zu einer Teilsteuerung kompensiert werden, da eine der Teilsteuerungen auch beide Kühlmittelpumpenversorgungen steuern kann. Somit kann die Teilsteuerung redundant ausgelegt sein, wie auch die Datenverbindung der Teilsteuerungen zu den Kühlmittelpumpenversorgungen.

In einer Ausgestaltung des Antriebs ist die erste Kühlmittelpumpe sowohl mit der ersten Kühlmittelpumpenversorgung betreibbar als auch mit der zweiten Kühlmittelpumpenversorgung. Die Kühlmittelpumpenversorgungen weisen eine Stromversorgung für die elektrische Maschine der jeweiligen Kühlmittelpumpe auf. Die Stromversorgung weist beispielsweise einen Wechselrichter auf, welcher die elektrische Maschine der jeweiligen Kühlmittelpumpe speist.

In einer Ausgestaltung des Antriebs ist nicht nur die erste Kühlmittelpumpe sowohl mit der ersten Kühlmittelpumpenversorgung betreibbar wie auch mit der zweiten Kühlmittelpumpenversorgung sondern die zweite Kühlmittelpumpe ist auch sowohl mit der ersten Kühlmittelpumpenversorgung betreibbar wie auch mit der zweiten Kühlmittelpumpenversorgung.

Damit lässt sich eine redundante Kühlmittelpumpenanbindung an den Antrieb realisieren. Dies ist beispielsweise bei permanentmagneterregten Synchronmaschinen als Antrieb für ein U-Boot realisierbar.

Durch eine redundante Kühlmittelpumpenanbindung kann eine Erhöhung der funktionalen Verfügbarkeit des Antriebsmotors für das wassergebundene Fortbewegungsmittel bei einer Fehlfunktion einer Kühlmittelpumpenversorgung bzw. einer Kühlmittelpumpe erzielt werden. So kann beispielsweise vermieden werden, dass bei einer Fehlfunktion einer Kühlmittelpumpenversorgung die Kühlleistung dieses Kühlkreises komplett ausfällt. Dies würde nämlich zu einer Reduzierung der maximal abzugebenden Leistung des gesamten Fahrmotors (Antriebsmotors) führen. Diese Leistungseinschränkung mindert die Einsatzmöglichkeiten des wassergebundenen Fortbewegungsmittels, wie es z.B. ein Unterseeboot darstellt.

In einer Ausgestaltung des Antriebs weist die erste Kühlmittelpumpenversorgung einen Stromrichter auf, welcher mit der ersten Kühlmittelpumpe und/oder mit der zweiten Kühlmittelpumpe verschaltbar ist. Der Stromrichter kann im Folgenden auch als erster Stromrichter bezeichnet werden. Der Stromrichter ist insbesondere ein Wechselrichter. Die Verschaltung erfolgt beispielsweise durch Schütze. Durch den Stromrichter der ersten Kühlmittelpumpenversorgung kann also die erste Kühlmittelpumpe alleine gespeist werden, oder die zweite Kühlmittelpumpe alleine gespeist werden oder die erste und die zweite Kühlmittelpumpe gemeinsam gespeist werden.

In einer Ausgestaltung des Antriebs weist die zweite Kühlmittelpumpenversorgung einen weiteren Stromrichter auf, welcher mit der ersten Kühlmittelpumpe und/oder mit der zweiten Kühlmittelpumpe verschaltbar ist. Der weitere Stromrichter kann im Folgenden auch als zweiter Stromrichter bezeichnet werden. Auch der weitere Stromrichter ist insbesondere ein Wechselrichter. Die Verschaltung erfolgt beispielsweise durch Schütze. Durch den weiteren Stromrichter, also den Stromrichter zweiten Kühlmittelpumpenversorgung kann also die erste Kühlmittelpumpe alleine gespeist werden, oder die zweite Kühlmittelpumpe alleine gespeist werden oder die erste und die zweite Kühlmittelpumpe gemeinsam gespeist werden.

In einer Ausgestaltung des Antriebs ist der erste Stromrichter und/oder der weitere Stromrichter mit einer Steuerung datentechnisch verbunden, wobei die Steuerung insbesondere hochverfügbar ist. Ein Beispiel für eine hochverfügbare Steuerung ist eine SIMATIC S7-400H. Mittels einer derartigen Steuerung lassen sich Redundanzen erzeugen. Die hochverfügbare Steuerung weist z.B. eine erste Teilsteuerung und eine zweite Teilsteuerung auf, welche redundant sind.

Ein Antrieb mit Redundanz eines wassergebundenen Fortbewegungsmittels, wie ein Unterseeboot oder ein Schiff, weist einen Elektromotor, eine erste Kühlmittelpumpe, eine zweite Kühlmittelpumpe, eine erste Kühlmittelpumpenversorgung und eine zweite Kühlmittelpumpenversorgung auf. Die erste Kühlmittelpumpenversorgung ist mit einer ersten Teilsteuerung und mit einer zweiten Teilsteuerung datentechnisch verbunden. Die zweite Kühlmittelpumpenversorgung ist mit der ersten Teilsteuerung und mit der zweiten Teilsteuerung datentechnisch verbunden. So lässt sich eine Redundanz für die Ansteuerung der Kühlmittelpumpenversorgungen erreichen.

In einer Ausgestaltung des Antriebs ist der erste Stromrichter mit dem zweiten Stromrichter datentechnisch verbunden. Derart lässt sich beispielsweise eine Synchronisierung erzielen.

In einer Ausgestaltung des Antriebs weist der Antrieb einen Luftkühlkreislauf auf, wobei eine Kühleinrichtung zur Kühlung des Luftkühlkreislaufs vorgesehen ist. Die Kühlmittelpumpen sind dabei beispielsweise zumindest zur Kühlung der Kühleinrichtung vorgesehen, welche ein Wärmetauscher ist.

In einer Ausgestaltung des Antriebs weist dieser ein Profinet zur Ausbildung einer datentechnischen Verbindung auf. Die datentechnische Verbindung gibt es zwischen der Steuerung und der ersten Kühlmittelpumpenversorgung bzw. der zweiten Kühlmittelpumpenversorgung.

In einer Ausgestaltung des Antriebs ist die Steuerung eine hochverfügbare Steuerung, wobei die erste Teilsteuerung und die zweite Teilsteuerung in die hochverfügbare Steuerung integriert sind.

In einer Ausgestaltung des Antriebs hat dieser eine redundante Busanbindung wie auch eine redundanter Kühlmittelpumpenversorgungen. Somit wird die Einsatzfähigkeit des Antriebs erheblich gesteigert, was insbesondere bei einem Unterseeboot (U-Boot) vorteilhaft sein kann.

In einer Ausgestaltung des Antriebs weist dieser ein erstes Datenkabel zwischen der ersten Teilsteuerung und der ersten Kühlmittelpumpenversorgung auf und ein zweites Datenkabel zwischen der ersten Teilsteuerung und der zweiten Kühlmittelpumpenversorgung, und ein drittes Datenkabel zwischen der zweiten Teilsteuerung und der ersten Kühlmittelpumpenversorgung, und ein viertes Datenkabel zwischen der zweiten Teilsteuerung und der zweiten Kühlmittelpumpenversorgung.

Bei einem wassergebundenen Fortbewegungsmittel, wie insbesondere einem Unterseeboot oder einem Schiff, kann dessen Einsatzfähigkeit durch Einbau eines beschriebenen Antriebes erhöht werden.

Bei einem Verfahren zum Betrieb eines Antriebs kann beispielsweise nach einer Fehlererkennung in einer Datenverbindung auf eine redundante funktionierende Datenverbindung umgeschaltet werden.

Bei einem Verfahren zum Betrieb eines Antriebs kann beispielsweise die erste Kühlmittelpumpe und die zweite Kühlmittelpumpe mit der ersten Kühlmittelpumpenversorgung betrieben werden.

Bei einem Verfahren zum Betrieb eines Antriebs kann beispielsweise die erste Kühlmittelpumpe und die zweite Kühlmittelpumpe mit der zweiten Kühlmittelpumpenversorgung betrieben werden.

Bei einem Verfahren zum Betrieb eines Antriebs kann beispielsweise die erste Kühlmittelpumpe und die zweite Kühlmittelpumpe mit der ersten und zweiten Kühlmittelpumpenversorgung gleichzeitig betrieben werden, was zu einer heißen Redundanz führt.

Die Erfindung wird nachfolgend beispielhaft mit den nachfolgenden Figuren beschrieben. Dabei zeigt:
- FIG 1: einen Antrieb mit redundanter Kühlung bzw. mit redundanter Kühlmittelpumpenversorgung;
- FIG 2: einen Antrieb mit redundanter Datenkommunikation;
- FIG 3: einen Antrieb mit redundanter Kühlung und redundanter Datenkommunikation;
- FIG 4: ein U-Boot mit einem Antrieb und
- FIG 5: ein Schiff mit einem Antrieb.

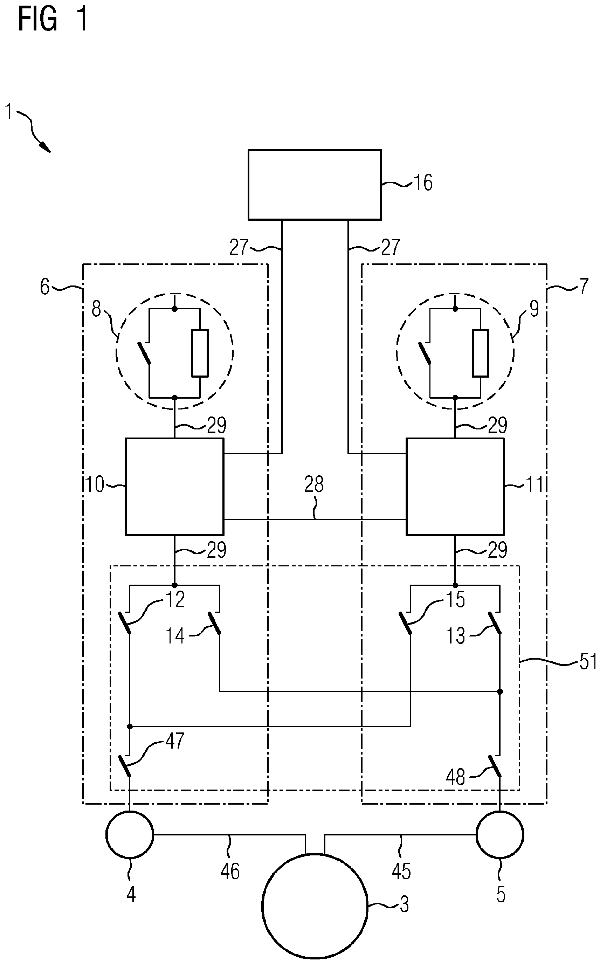

Die Darstellung nach FIG 1 zeigt einen Antrieb 1 mit redundanter Kühlung bzw. mit redundanter Kühlmittelpumpenversorgung 6 und 7. Der Antrieb 1 weist einen Elektromotor 3 auf, welcher z.B. motorisch bzw. generatorisch betreibbar ist. Zur Kühlung der elektrischen Maschine 3 ist eine erste Kühlmittelpumpe 4 und eine zweite Kühlmittelpumpe 5 vorgesehen. Das Kühlmedium ist beispielsweise eine Flüssigkeit. Die erste Kühlmittelpumpe 4 ist in einem ersten Kühlmittelkreislauf 46 für die elektrische Maschine 3. Die zweite Kühlmittelpumpe 5 ist in einem zweiten Kühlmittelkreislauf 45 für die elektrische Maschine 3. Die erste Kühlmittelpumpe 4 wie auch die zweite Kühlmittelpumpe 5 weisen jeweils zum Antrieb eine elektrische Maschine auf, welche in der Figur 1 nicht separat dargestellt sind. Der Antrieb 1 weist einen ersten Stromrichter 10 und einen zweiten Stromrichter 11 auf. Die Stromrichter 10 und 11 sind insbesondere Wechselrichter oder Umrichter. Über Leistungskabel 29 werden die Kühlmittelpumpen 4 und 5 durch die Stromrichter 10 und 11 mit elektrischer Energie versorgt. Der erste Stromrichter 10 ist mit der ersten Kühlmittelpumpe 4 über ein erstes Hauptschütz 12 und einen ersten Trennschalter 47 verbunden. Der zweite Stromrichter 11 ist mit der zweiten Kühlmittelpumpe 5 über ein zweites Hauptschütz 13 und einen zweiten Trennschalter 48 verbunden. Der erste Stromrichter 10 ist mit der zweiten Kühlmittelpumpe 5 über ein erstes Umschaltschütz 14 und den zweiten Trennschalter 48 verbunden. Der zweite Stromrichter 11 ist mit der ersten Kühlmittelpumpe 4 über ein zweites Umschaltschütz 15 und den ersten Trennschalter 47 verbunden. Das erste Hauptschütz 12 ist in Reihe mit dem ersten Trennschalter 47. Das zweite Hauptschütz 13 ist in Reihe mit dem zweiten Trennschalter 48. Das erste Umschaltschütz 14 ist zwischen dem ersten Stromrichter 10 und einem Knoten 50. Der Knoten 50 ist zwischen dem zweiten Hauptschütz 13 und dem zweiten Trennschalter 48. Das erste Hauptschütz 12 ist in Reihe mit dem ersten Trennschalter 47. Das zweite Umschaltschütz 15 ist zwischen dem zweiten Stromrichter 11 und einem Knoten 49. Der Knoten 49 ist zwischen dem ersten Hauptschütz 12 und dem ersten Trennschalter 47. Auf diese Weise lässt sich der erste Stromrichter 10 mit der ersten Kühlmittelpumpe 4 und/oder mit der zweiten Kühlmittelpumpe 5 elektrisch verbinden. Auf diese Weise lässt sich auch der zweite Stromrichter 11 mit der zweiten Kühlmittelpumpe 5 und/oder mit der ersten Kühlmittelpumpe 4 elektrisch verbinden. So können die Stromrichter 10 und 11 redundant ausgelegt werden, da beide in der Lage sind die Kühlmittelpumpen 4 und 5 elektrisch zu versorgen.

Die Stromrichter 10 und 11 können beispielsweise über eine Kommunikationsverbindung 28 verbunden werden. Diese kann beispielsweise für eine Synchronisation genutzt werden. Der erste Stromrichter 10 wird über ein erstes Vorladeschütz 8 gespeist. Der zweite Stromrichter 11 wird über ein zweites Vorladeschütz 9 gespeist. Die Regelung und/oder Steuerung des ersten Stromrichters 10 und des zweiten Stromrichters 11 erfolgt mittels einer Steuerung 16. Hierfür ist der erste Stromrichter 10 und der zweite Stromrichter 11 jeweils über eine Kommunikationsverbindung 27, wie beispielsweise ein Kommunikationskabel, mit der Steuerung 16 datentechnisch verbunden.

Die erste Kühlmittelpumpenversorgung 6 weist das erste Vorladeschütz 8, den ersten Stromrichter 10, das erste Hauptschütz 12, den ersten Trennschalter 47 und das erste Umschaltschütz 14 auf. Die zweite Kühlmittelpumpenversorgung 7 weist das zweite Vorladeschütz 9, den zweiten Stromrichter 11, das zweite Hauptschütz 13, den zweiten Trennschalter 48 und das zweite Umschaltschütz 15 auf. Die Verschaltung von Hauptschützen 12, 13 und Umschaltschützen 14, 15 ergibt eine Verschaltung 51.

Durch die in der FIG 1 dargestellte Verschaltungslogik ist es möglich bei einer Fehlererkennung in einer Kühlmittelpumpenversorgung den defekten Kühlmittelpumpenversorgungsstrang auf die noch verfügbare Kühlmittelpumpenversorgung aufzuschalten. Die Konzeption der Auslegung der Versorgungseinheiten, also insbesondere der Stromrichter, erfolgt beispielsweise so, dass ein redundanter Betrieb gewährleistet wird. So kann der erste Stromrichter 10 so ausgelegt werden, dass mit diesem die erste Kühlmittelpumpe 4 und die zweite Kühlmittelpumpe 5 mit Nennleistung betrieben werden können. So kann allerdings auch der zweite Stromrichter 11 so ausgelegt werden, dass mit diesem die erste Kühlmittelpumpe 4 und die zweite Kühlmittelpumpe 5 mit Nennleistung betrieben werden können. So kann trotz einer Fehlfunktion einer Kühlmittelpumpenanschaltung, bzw. eines Stromrichters, bzw. einer Kühlmittelpumpenversorgung 6, 7 erreicht werden, dass die elektrische Maschine 3, also z.B. ein Fahrmotor eines Unterseebootes, nicht mehr eingeschränkt ist. Die Einschränkung ergäbe sich z.B. durch eine nicht ausrechende Kühlung für einen Nennbetrieb des Fahrmotors oder für einen Betrieb des Fahrmotors mit maximaler Leistung. Der Fahrmotor kann beispielsweise auch ein Fahrmotor eines Schiffes sein, wie beispielsweise ein Containerschiff, ein Passagierschiff, eine Fregatte, ein Frachter oder dergleichen. Die Kühlmittelpumpenversorgung 6, 7 ist redundant konzipiert und umgesetzt. Da bei Fehlfunktion einer Kühlmittelpumpenanschaltung bzw. Kühlmittelpumpenversorgung 6, 7 keine zwangsläufige Reduzierung der Abgabeleistung des Fahrmotors 3 auftritt, ergibt sich hieraus ein Nutzen bezüglich einer erhöhten Einsatzbereitschaft eines wassergebundenen Fortbewegungsmittels.

Die in der FIG 1 verwendeten Bezugszeichen werden auch in den nachfolgenden Beschreibungen der weiteren Figuren verwendet, wobei gleiche Bezugszeichen für gleichartige Elemente verwendet werden.

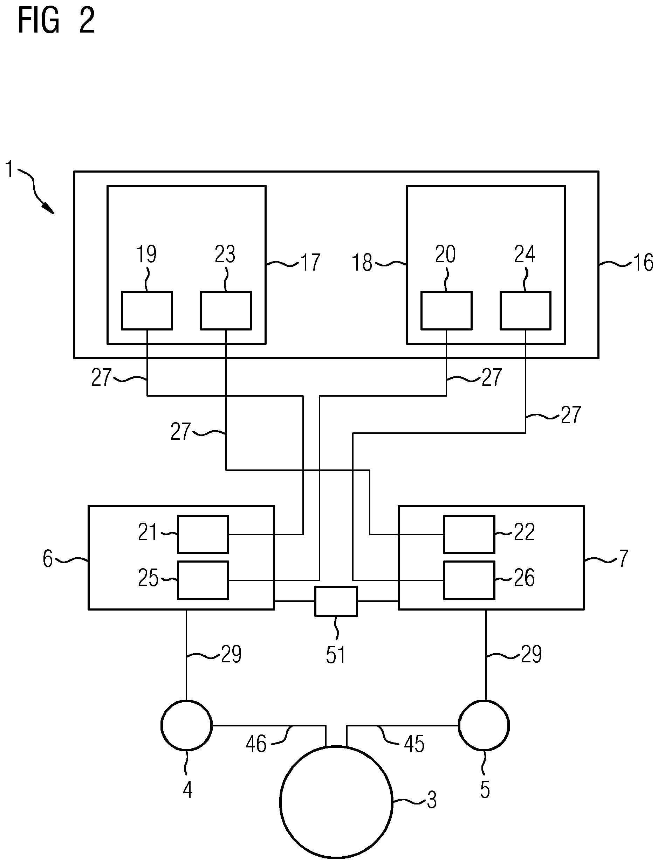

Die Darstellung nach FIG 2 zeigt einen Antrieb 1 mit redundanter Datenkommunikation. FIG 2 zeigt wie FIG 1 eine erste Kühlmittelpumpenversorgung 6 und eine zweiten Kühlmittelpumpenversorgung 7, allerdings in einer etwas schematisierten Form. Die Kühlmittelpumpenversorgungen 6 und 7 mit einer im Vergleich zu FIG 1 nicht näher dargestellten Verschaltung 51 sind mit den Kühlmittelpumpen 4 und 5 zur Kühlung der elektrischen Maschine 3 über Kühlkreisläufe 45 und 46 verbunden. Die erste Kühlmittelpumpenversorgung 6 weist einen ersten Datenanschluss 21 und einen zweiten Datenanschluss 25 auf. Die zweite Kühlmittelpumpenversorgung 7 weist auch einen ersten Datenanschluss 22 und einen zweiten Datenanschluss 26 auf. Die Steuerung 16, welche insbesondere eine hochverfügbare bzw. fehlerredundante Steuerung ist, weist eine erste Teilsteuerung 17 und eine zweite Teilsteuerung 18 auf. Die erste Teilsteuerung 17 weist einen ersten Datenanschluss 19 und einen zweiten Datenanschluss 23 auf. Die zweite Teilsteuerung 18 weist einen ersten Datenanschluss 20 und einen zweiten Datenanschluss 24 auf. Die Datenanschlüsse der Teilsteuerungen 17, 18 und die Datenanschlüsse der Kühlmittelpumpenversorgungen 6, 7 sind insbesondere Busanschlüsse wie z.B. die eines Profibusses. Die Datenanschlüsse 21 und 25 der ersten Kühlmittelpumpenversorgung 6 befinden sich beispielsweise an einem Stromrichter 10 der Kühlmittelpumpenversorgung 6, wie dieser in Figur 1 dargestellt ist. Die Datenanschlüsse 22 und 26 der zweiten Kühlmittelpumpenversorgung 7 befinden sich beispielsweise an einem Stromrichter 11 der Kühlmittelpumpenversorgung 6, wie dieser in FIG 1 dargestellt ist. Nach FIG 2 gibt es folgende Kommunikationsverbindung 27: zwischen dem ersten Datenanschluss 21 der ersten Kühlmittelpumpenversorgung 6 und dem ersten Datenanschluss 19 der ersten Teilsteuerung 17; zwischen dem zweiten Datenanschluss 25 der ersten Kühlmittelpumpenversorgung 6 und dem ersten Datenanschluss 20 der zweiten Teilsteuerung 18; zwischen dem ersten Datenanschluss 22 der zweiten Kühlmittelpumpenversorgung 7 und dem zweiten Datenanschluss 23 der ersten Teilsteuerung 17 und zwischen dem zweiten Datenanschluss 26 der zweite Kühlmittelpumpenversorgung 7 und dem zweiten Datenanschluss 24 der zweiten Teilsteuerung 18.

Durch die redundante Kommunikation fällt bei einem Kommunikationsverlust einer Kühlmittelpumpenversorgung 6 oder 7 zur übergeordneten Steuerung 16 die Kühlleistung des Kühlkreises nicht mehr komplett aus. Eine Kommunikation zwischen den Kühlmittelpumpenversorgungen 6 und 7 zur Steuerung 16 bleibt also bestehen. Dafür weist die Steuerung insbesondere eine erste Teilsteuerung 17 und eine zweite Teilsteuerung 18 auf, welche beide jeweils mit beiden Kühlmittelpumpenversorgung 6 oder 7 in Datenübermittlung treten können. Ein Kommunikationsfehler, also ein Fehler in der Datenübertragung zwischen der Steuerung 16 und den Kühlmittelpumpenversorgung 6 oder 7, führt so nicht mehr zwangsläufig zur Reduktion der maximal abzugebenden Leistung des gesamten Antriebs bzw. des Elektromotors 3. Es ergibt sich dadurch also z.B. keine Leistungseinschränkung mehr, was beispielsweise die Einsatzmöglichkeiten eines U-Bootes mindern würde.

Die Steuerung ist beispielsweise eine SIMATIC S7-400H, die beispielsweise mit zwei Masterdrives als Stromrichter 6 und 7 kommuniziert, die jeweils eine Pumpe 4 bzw. 5 versorgen. Bei einem Fehler in einem Kühlstrang, also in einer Kühlmittelpumpenversorgung 5 oder 6, können die Folgen auf den gesamten Antrieb 1 reduziert werden. Es kann beispielsweise eine Erhöhung der Verfügbarkeit der Antriebsanlage auf einem U-Boot ohne Erhöhung der Anzahl der Hilfsaggregate erzielt werden, wenn zur Kühlung des Elektromotors für den Antrieb des Propellers beispielsweise bereits zwei Kühlmittelpumpen mit zwei Stromrichtern vorgesehen worden wären.

Durch die redundante Busanbindung für die Kommunikation zwischen zwei oder mehreren redundanten Kühlmittelpumpenversorgungen 6, 7 und einer übergeordneten Steuerung 6, beispielsweise einer S7-400H, wird eine deutlich höhere Verfügbarkeit des Antriebsmotors 3 bei einer Fehlfunktionen der Busverbindung erreicht. Der Bus ist beispielsweise ein Profibus oder ein Profinet. So wird zum Beispiel durch eine Fehlererkennung in einer der redundanten Profinetanbindungen, die Kommunikation auf die funktionierenden Profinetanbindungen umgeschaltet. Bei der Auslegung und Konzeption der Profinetverbindung kann darauf geachtet werden, dass es bei Ausfall eines Kommunikationsstranges 27 zu keiner Auswirkung im redundanten Kommunikationsstrang führt und es deshalb keine Einschränkungen im Betrieb gibt. So kann eine unbeschränkte Funktionalität des gesamten Antriebsmotors (Elektromotor) 3 bei Ausfall oder im Fehlerfall einer Kommunikationsverbindung erreicht werden. Hierfür dient die redundante Busverbindung zwischen den Kühlmittelpumpenversorgungen 6, 7 und der übergeordneten Steuerung 16. Die Einsatzfähigkeit eines wassergebundenen Fortbewegungsmittels erhöht sich, da bei einer Kommunikationsstörung in einem Kommunikationsstrang keine zwangsläufige Reduktion der Abgabeleistung des Antriebsmotors auftritt.

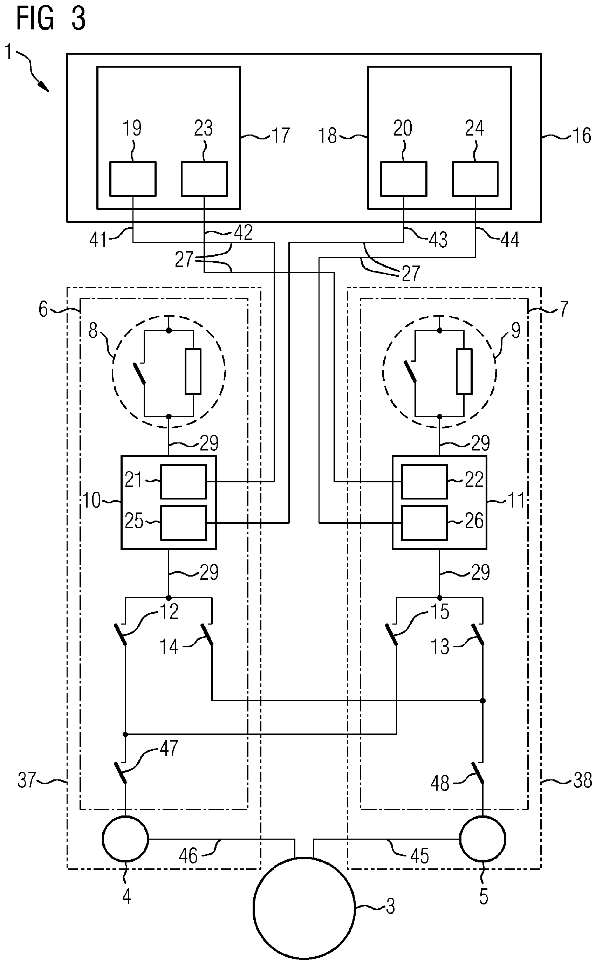

Die Darstellung nach FIG 3 zeigt im Vergleich zu FIG 1 zusätzliche Details. Zusätzlich sind Kühleinrichtungen 37 und 38 eingeführt. Die Kühleinrichtung 37 weist die Kühlmittelpumpenversorgung 6 und die Kühlmittelpumpe 4 auf. Die Kühleinrichtung 38 weist die Kühlmittelpumpenversorgung 7 und die Kühlmittelpumpe 5 auf. Der erste Stromrichter 10 weist einen ersten Datenanschluss 21 und einen zweiten Datenanschluss 25 auf. Der zweite Stromrichter 11 weist einen ersten Datenanschluss 22 und einen zweiten Datenanschluss 26 auf. Die Steuerung 16 weist ähnlich wie in FIG 2 dargestellt eine erste Teilsteuerung 17 und eine zweite Teilsteuerung 18 auf. Die Teilsteuerungen 17 und 18 sind redundant ausgelegt. Die Kommunikationsverbindungen erfolgen über Datenkabel. Ein erstes Datenkabel 41 ist zwischen der ersten Teilsteuerung 17 und der ersten Kühlmittelpumpenversorgung 6, insbesondere dem ersten Stromrichter 10. Ein zweites Datenkabel 42 ist zwischen der ersten Teilsteuerung 17 und der zweiten Kühlmittelpumpenversorgung 7, insbesondere dem zweiten Stromrichter 11. Ein drittes Datenkabel 43 ist zwischen der zweiten Teilsteuerung 18 und der ersten Kühlmittelpumpenversorgung 6, insbesondere dem ersten Stromrichter 10. Ein viertes Datenkabel 44 ist zwischen der zweiten Teilsteuerung 18 und der zweiten Kühlmittelpumpenversorgung 7, insbesondere dem zweiten Stromrichter 11.

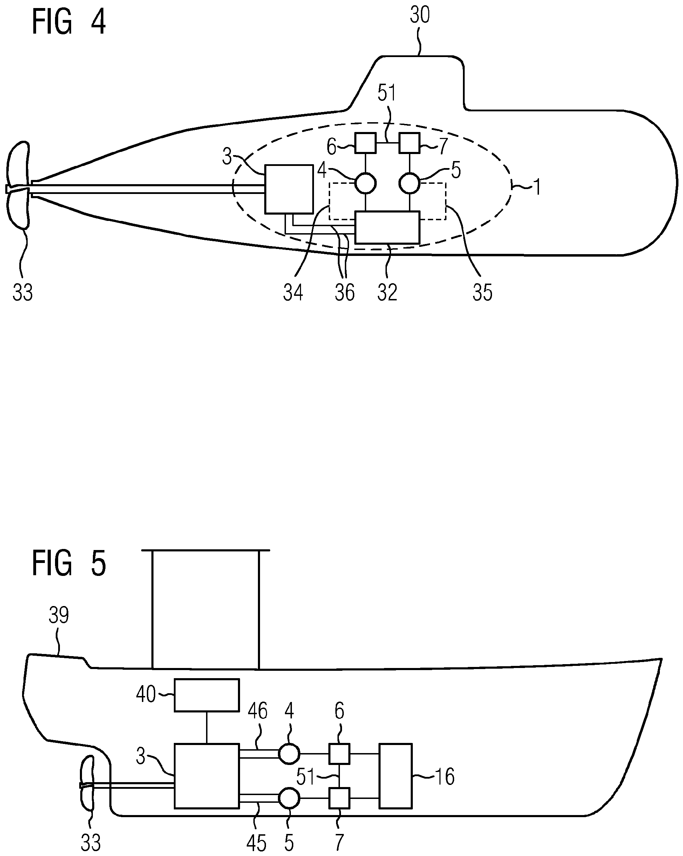

Die Darstellung nach FIG 4 zeigt ein U-Boot 30 mit einem Elektromotor 3 zum Antrieb eines Propellers 33. Über einen Kühlmedienkreislauf 36 ist der Elektromotor 3 durch einen Wärmetauscher 32 kühlbar. Kühlmittelpumpen 4 und 5 treiben Kühlmedienkreisläufe 34 bzw. 35 an. Die den Kühlmittelpumpen 4 und 5 zugeordneten Kühlmittelpumpenversorgungen 6 und 7 sind redundant verschaltet 51. In dem U-Boot 30 kann eine redundante Kühlmittelpumpenversorgung und/oder eine redundante Kommunikation wie obig im Text beschrieben realisiert werden. Der Antrieb 1 nach FIG 4 ist auch in einem Schiff realisierbar.

Die Darstellung nach FIG 5 zeigt ein Schiff 39 mit einem Elektromotor 3 zum Antrieb eines Propellers 33. Über Kühlmedienkreisläufe 45 und 46 ist der Elektromotor 3 kühlbar. Kühlmittelpumpen 4 und 5 treiben Kühlmedienkreisläufe 45 bzw. 46 an. Die den Kühlmittelpumpen 4 und 5 zugeordneten Kühlmittelpumpenversorgungen 6 und 7 sind redundant verschaltet 51. In dem Schiff 39 kann eine redundante Kühlmittelpumpenversorgung und/oder eine redundante Kommunikation wie obig im Text beschrieben realisiert werden. Der Antrieb 1 nach FIG 5 ist auch in einem U-Boot realisierbar.

## Patentansprüche

1. Antrieb (1) eines wassergebundenen Fortbewegungsmittels, wie ein Unterseeboot (30) oder ein Schiff (39), wobei der Antrieb (1) einen Elektromotor (3), eine erste Kühlmittelpumpe (4), eine zweite Kühlmittelpumpe (5), eine erste Kühlmittelpumpenversorgung (6) und eine zweite Kühlmittelpumpenversorgung (7) aufweist, **dadurch gekennzeichnet dass** die erste Kühlmittelpumpenversorgung (6) mit einer ersten Teilsteuerung (17) und mit einer zweiten Teilsteuerung (18) datentechnisch verbunden ist, und wobei die zweite Kühlmittelpumpenversorgung (7) mit der ersten Teilsteuerung (17) und mit der zweiten Teilsteuerung (18) datentechnisch verbunden ist.

2. Antrieb (1) nach Anspruch 1, wobei die erste Kühlmittelpumpe (4) sowohl mit der ersten Kühlmittelpumpenversorgung (6) betreibbar ist als auch mit der zweiten Kühlmittelpumpenversorgung (7) und/oder wobei die zweite Kühlmittelpumpe (5) sowohl mit der ersten Kühlmittelpumpenversorgung (6) betreibbar ist als auch mit der zweiten Kühlmittelpumpenversorgung (7) .

3. Antrieb (1) nach Anspruch 2, wobei die erste Kühlmittelpumpenversorgung (6) einen Stromrichter (10) aufweist, welcher mit der ersten Kühlmittelpumpe (4) und/oder mit der zweiten Kühlmittelpumpe (5) verschaltbar ist.

4. Antrieb (1) nach Anspruch 2 oder 3, wobei die zweite Kühlmittelpumpenversorgung (7) einen weiteren Stromrichter (11) aufweist, welcher mit der ersten Kühlmittelpumpe (4) und/oder mit der zweiten Kühlmittelpumpe (4) verschaltbar ist.

5. Antrieb (1) nach Anspruch 3 oder 4, wobei der erste Stromrichter (10) und/oder der weitere Stromrichter (11) mit einer Steuerung (16) datentechnisch verbunden sind, wobei die Steuerung (16) insbesondere hochverfügbar ist.

6. Antrieb (1) nach einem der Ansprüche 3 bis 5, wobei der erste Stromrichter (10) mit dem weiteren Stromrichter (11) datentechnisch verbunden ist.

7. Antrieb (1) nach einem der Ansprüche 1 bis 6, wobei der Antrieb (1) einen Luftkühlkreislauf aufweist, wobei eine Kühleinrichtung (25) zur Kühlung des Luftkühlkreislaufs vorgesehen ist.

8. Antrieb (1) nach einem der Ansprüche 1 bis 7, mit einem Profinet zur Ausbildung einer datentechnischen Verbindung.

9. Antrieb (1) nach einem der Ansprüche 1 bis 8, wobei die erste Teilsteuerung (17) und die zweite Teilsteuerung (18) in einer hochverfügbaren Steuerung (16) integriert sind.

10. Antrieb (1) nach einem der Ansprüchen 1 bis 9, mit einer redundanten Busanbindung und einer redundanten Kühlmittelpumpenversorgung (6,7).

11. Antrieb (1) nach einem der Ansprüchen 1 bis 10, mit einem ersten Datenkabel (41) zwischen der ersten Teilsteuerung (17) und der ersten Kühlmittelpumpenversorgung (6), mit einem zweiten Datenkabel (42) zwischen der ersten Teilsteuerung (17) und der zweiten Kühlmittelpumpenversorgung (7), mit einem dritten Datenkabel (43) zwischen der zweiten Teilsteuerung (18) und der ersten Kühlmittelpumpenversorgung (6), und mit einem vierten Datenkabel (44) zwischen der zweiten Teilsteuerung (18) und der zweiten Kühlmittelpumpenversorgung (7) .

12. Wassergebundenes Fortbewegungsmittels, insbesondere ein Unterseeboot oder ein Schiff, wobei das wassergebundene Fortbewegungsmittel einen Antrieb (1) nach einem der Ansprüche 1 bis 11 aufweist.

13. Verfahren zum Betrieb eines Antriebs (1) nach einem der Ansprüche 1 bis 11, wobei nach einer Fehlererkennung in einer Datenverbindung auf eine redundante funktionierende Datenverbindung umgeschaltet wird.

14. Verfahren zum Betrieb eines Antriebs (1) nach einem der Ansprüche 1 bis 11, wobei die erste Kühlmittelpumpe (4) und die zweite Kühlmittelpumpe (5) mit der ersten Kühlmittelpumpenversorgung (6) betrieben werden.

15. Verfahren nach Anspruch 14, wobei die erste Kühlmittelpumpe (4) und die zweite Kühlmittelpumpe (5) mit der zweiten Kühlmittelpumpenversorgung (6) betrieben werden.

16. Verfahren zum Betrieb eines Unterseebootes oder eines Schiffes, wobei das Unterseeboot oder Schiff einen Antrieb (1) nach einem der Ansprüche 1 bis 11 aufweist und ein Verfahren zum Betrieb eines Antriebes nach einem der Ansprüche 13 bis 15 verwendet wird.

## Claims

1. Drive (1) of a water-borne means of transport, such as a submarine (30) or a ship (39), wherein the drive (1) has an electric motor (3), a first coolant pump (4), a second coolant pump (5), a first coolant pump supply unit (6) and a second coolant pump supply unit (7), **characterised in that** the first coolant pump supply unit (6) is connected to a first control sub-unit (17) and to a second control sub-unit (18) for data communication, and wherein the second coolant pump supply unit (7) is connected to the first control sub-unit (17) and to the second control sub-unit (18) for data communication.

2. Drive (1) according to claim 1, wherein the first coolant pump (4) can be operated with both the first coolant pump supply unit (6) as well as with the second coolant pump supply unit (7) and/or wherein the second coolant pump (5) can be operated with both the first coolant pump supply unit (6) as well as with the second coolant pump supply unit (7).

3. Drive (1) according to claim 2, wherein the first coolant pump supply unit (6) has a power converter (10), which can be interconnected with the first coolant pump (4) and/or with the second coolant pump (5).

4. Drive (1) according to claim 2 or 3, wherein the second coolant pump supply unit (7) has a further power converter (11) which can be interconnected with the first coolant pump (4) and/or the second coolant pump (4).

5. Drive (1) according to claim 3 or 4, wherein the first power converter (10) and/or the further power converter (11) are connected to a controller (16) for data communication, wherein the controller (16) is in particular highly available.

6. Drive (1) according to one of claims 3 to 5, wherein the first power converter (10) is connected to the further power converter (11) for data communication.

7. Drive (1) according to one of claims 1 to 6, wherein the drive (1) has an air cooling circuit, wherein a cooling device (25) is provided for cooling the air cooling circuit.

8. Drive (1) according to one of claims 1 to 7, having a Profinet to form a data communication link.

9. Drive (1) according to one of claims 1 to 8, wherein the first control sub-unit (17) and the second control sub-unit (18) are integrated in a high-availability controller (16).

10. Drive (1) according to one of claims 1 to 9, having a redundant bus connection and a redundant coolant pump supply unit (6, 7).

11. Drive (1) according to one of claims 1 to 10, having a first data cable (41) between the first control sub-unit (17) and the first coolant pump supply unit (6), having a second data cable (42) between the first control sub-unit (17) and the second coolant pump supply unit (7), having a third data cable (43) between the second control sub-unit (18) and the first coolant pump supply unit (6), and having a fourth data cable (44) between the second sub-control (18) and the second coolant pump supply unit (7).

12. Water-borne means of transport, in particular a submarine or ship, wherein the water-borne means of transport has a drive (1) according to one of claims 1 to 11.

13. Method for operating a drive (1) according to one of claims 1 to 11, wherein a redundant functioning data connection is switched to after an error has been detected in a data connection.

14. Method for operating a drive (1) according to one of claims 1 to 11, wherein the first coolant pump (4) and the second coolant pump (5) are operated with the first coolant pump supply unit (6).

15. Method according to claim 14, wherein the first coolant pump (4) and the second coolant pump (5) are operated with the second coolant pump supply unit (6).

16. Method for operating a submarine or a ship, wherein the submarine or ship has a drive (1) according to one of claims 1 to 11 and a method for operating a drive according to one of claims 13 to 15 is used.

## Revendications

1. Propulsion (1) d'un moyen de locomotion sur l'eau, comme un sous-marin (30) ou un bateau (39), la propulsion (1) ayant un moteur (3) électrique, une première pompe (4) de fluide de refroidissement, une deuxième pompe (5) de fluide de refroidissement, une première alimentation (6) de pompe de fluide de refroidissement et une deuxième alimentation (7) de pompe de fluide de refroidissement, **caractérisée en ce que** la première alimentation (6) de pompe de fluide de refroidissement est reliée en technique de données à une première sous-commande (17) et à une deuxième sous-commande (18) et dans laquelle la deuxième alimentation (7) de pompe de fluide de refroidissement est reliée en technique de données à la première sous-commande (17) et à la deuxième sous-commande (18).

2. Propulsion (1) suivant la revendication 1, dans laquelle la première pompe (4) de fluide de refroidissement peut fonctionner tant avec la première alimentation (6) de pompe de fluide de refroidissement qu'également avec la deuxième alimentation (7) de pompe de fluide de refroidissement et/ou dans laquelle la deuxième pompe (5) de fluide de refroidissement peut fonctionner tant avec la première alimentation (6) de pompe de fluide de refroidissement qu'également avec la deuxième alimentation (7) de pompe de fluide de refroidissement.

3. Propulsion (1) suivant la revendication 2, dans laquelle la première alimentation (6) de pompe de fluide de refroidissement a un convertisseur (10) de courant, qui peut être connecté à la première pompe (4) de fluide de refroidissement et/ou à la deuxième pompe (5) de fluide de refroidissement

4. Propulsion (1) suivant la revendication 2 ou 3, dans laquelle la deuxième alimentation (7) de pompe de fluide de refroidissement a un autre convertisseur (11) de courant, qui peut être connecté à la première pompe (4) de fluide de refroidissement et/ou à la deuxième pompe (4) de fluide de refroidissement.

5. Propulsion (1) suivant la revendication 3 ou 4, dans laquelle le premier convertisseur (10) de courant et/ou l'autre convertisseur (11) de courant sont reliés en technique de données à une commande (16), la commande (16) étant notamment très disponible.

6. Propulsion (1) suivant l'une des revendications 3 à 5, dans laquelle le premier convertisseur (10) de courant est relié en technique de données à l'autre convertisseur (11) de courant.

7. Propulsion (1) suivant l'une des revendications 1 à 6, dans laquelle la propulsion (1) a un circuit de refroidissement par de l'air, un dispositif (25) de refroidissement étant prévu pour refroidir le circuit de refroidissement par de l'air.

8. Propulsion (1) suivant l'une des revendications 1 à 7, comprenant un profinet pour constituer une liaison en technique de données.

9. Propulsion (1) suivant l'une des revendications 1 à 8, dans laquelle la première sous-commande (17) et la deuxième sous-commande (18) sont intégrées dans une commande (16) très disponible.

10. Propulsion (1) suivant l'une des revendications 1 à 9, comprenant une liaison redondante par bus et une alimentation (6, 7) redondante de pompe de fluide de refroidissement

11. Propulsion (1) suivant l'une des revendications 1 à 10, comprenant un premier câble (41) de données entre la première sous-commande (17) et la première alimentation (6) de pompe de fluide de refroidissement comprenant un deuxième câble (42) de données entre la première sous-commande (17) et la deuxième alimentation (7) de pompe de fluide de refroidissement, comprenant un troisième câble (43) de données entre la deuxième sous-commande (18) et la première alimentation (6) de pompe de fluide de refroidissement et comprenant un quatrième câble (44) de données entre la deuxième sous-commande (18) et la deuxième alimentation (7) de pompe de fluide de refroidissement.

12. Moyen de locomotion sur l'eau, notamment sous-marin ou bateau, le moyen de locomotion sur l'eau ayant une propulsion (1) suivant l'une des revendications 1 à 11.

13. Procédé pour faire fonctionner une propulsion (1) suivant l'une des revendications 1 à 11, dans lequel, après avoir détecté un défaut dans une liaison de données, on commute sur une liaison de données fonctionnant de manière redondante.

14. Procédé pour faire fonctionner une propulsion (1) suivant l'une des revendications 1 à 11, dans lequel on fait fonctionner la première pompe (4) de fluide de refroidissement et la deuxième pompe (5) de fluide de refroidissement avec la première alimentation (6) de pompe de fluide de refroidissement.

15. Procédé suivant la revendication 14, dans lequel on fait fonctionner la première pompe (4) de fluide de refroidissement et la deuxième pompe (5) de fluide de refroidissement avec la deuxième alimentation (6) de pompe de fluide de refroidissement.

16. Procédé pour faire fonctionner un sous-marin ou un bateau, dans lequel le sous-marin ou le bateau a une propulsion (1) suivant l'une des revendications 1 à 11 et on utilise un procédé pour faire fonctionner une propulsion suivant l'une des revendications 13 à 15.
